# EUROPEAN PATENT APPLICATION

(11) **EP 4 616 979 A1**
(43) Date of publication of application: **17.09.2025**
(21) Application number: 24163602.6
(22) Date of filing: 14.03.2024
(51) Int. Cl.: B23B 27/06, B23G 5/06

(54) **THREAD CUTTING TAP WITH CHIP BREAKING FEATURE**

(71) Applicant: AB Sandvik Coromant, 811 81 Sandviken (SE)
(72) Inventor: Jagadale, Kiran, 811 81 Sandviken (SE)
(74) Representative: Sandvik

(57) **Abstract**

The invention relates to a thread cutting tap (1, 10) having an axial extension along a longitudinal axis (C) thereof from a front end (2) of the thread cutting tap to a rear end (3) of the thread cutting tap, wherein the thread cutting tap comprises a thread cutting portion (4) extending along the longitudinal axis (C) over at least a part of the axial extension of the thread cutting tap, and wherein the thread cutting portion (4) comprises a plurality of lands including a first land (21), a second land (22), and a third land (23), separated from each other by a corresponding number of associated flutes, including a first flute (31), a second flute (32), and a third flute (33). Each of the lands includes a plurality of thread cutting teeth and each of the flutes includes a rake face (51, 52, 53), wherein the first flute (31) comprises a first chip breaking feature (41) that extends, in the direction of extension of the first flute, a first distance (d1) on the rake face (51) of the first flute. At least one of the second flute (32) and the third flute (33) lacks a chip breaking feature. The invention also relates to a method for manufacturing a thread cutting tap.

## Description

### TECHNICAL FIELD

The invention relates to metal cutting, and in particular to thread cutting taps for cutting internal threads in holes in metal workpieces. The invention also relates to a method for manufacturing a thread cutting tap.

### BACKGROUND ART

In the field of metal cutting, a thread cutting tap may be used for machining an internal thread in a hole in a workpiece. In some materials, such as low alloy steels or aluminum, the chips produced in the thread cutting process may be long and difficult to evacuate. Long chips that remain in the cutting zone may damage the tool or the workpiece during the cutting process which may result in inferior quality of the machined thread. Long chips may also entangle around the tap, causing so called "bird nests" of chips.

To mitigate these effects, it is known to apply some kind of chip breaker on the rake face of the thread cutting teeth of the tap. As an example, US20050042049 discloses a screw tap wherein the cutting edges have, in a starting taper region thereof, a chamfer that reduces a rake angle of the cutting edges. As a consequence, the chips produced by such cutting edge are curled more tightly, or break away sooner, than when using a geometry with a wholly positive rake angle. Thereby, chips are more easily evacuated via the flutes of the tap.

However, even when using thread cutting taps with chip breakers, the quality of the produced thread in a workpiece is often not as high as would be desired.

Accordingly, there is a need for improved thread cutting taps.

### SUMMARY

It is an object of the present invention to mitigate the shortcomings of the prior art and to provide a thread cutting tap that is able to cut a thread of high quality. Another object is to reduce problems caused by long chips, such as chip jamming, bird nesting and insufficient chip evacuation.

Thus, according to a first aspect, the invention relates to a thread cutting tap having an axial extension along a longitudinal axis thereof from a front end of the thread cutting tap to a rear end of the thread cutting tap, wherein the thread cutting tap comprises a thread cutting portion extending along the longitudinal axis over at least a part of the axial extension of the thread cutting tap, and wherein the thread cutting portion comprises a plurality of lands including a first land, a second land, and a third land, separated from each other by a corresponding number of associated flutes, including a first flute, a second flute, and a third flute, wherein each of the lands includes a plurality of thread cutting teeth and each of the flutes includes a rake face. The first flute comprises a first chip breaking feature that extends, in the direction of extension of the flute, a first distance on the rake face of the flute, whereas at least one of the second flute and the third flute lacks a chip breaking feature.

The inventor has found that the use of chip breakers on thread cutting taps in some cases adversely affects the quality (surface finish) of the produced thread. The inventor has also found that chip breaking features on a thread cutting tap do not necessarily have to be applied in the same way in all flutes of the thread cutting tap. In particular, the inventor has found that an advantageous compromise between chip breaking efficiency and surface finish may be obtained if a chip breaking feature is applied in one of the flutes whereas at least one other flute lacks a chip breaking feature. Thereby, a sufficient chip breaking effect may be obtained while still obtaining a good surface finish of the resulting thread.

The flutes of the thread cutting tap may be helical, such that the flutes and the lands extend axially along the thread cutting portion following a curved helical path around the longitudinal axis, with this path deviating from the longitudinal axis by a helix angle. Alternatively, the flutes may be straight, i.e., aligned generally in parallel to the longitudinal axis of the tap. In such case, the direction of extension of the flute corresponds to a direction parallel to the longitudinal axis.

The rake face of a flute corresponds to a surface in the flute adjacent the thread cutting teeth of the associated land that immediately follows the flute in the intended direction of rotation of the tap. A chip breaking feature according to the present disclosure is formed on, and may thus be considered as a part of, such rake face. A cutting edge is formed at an intersection between the rake face of the flute and a surface (flank) of the thread cutting teeth of the associated land.

For each thread cutting tooth, the cutting edge may include a primary cutting edge and a secondary cutting edge. A primary cutting edge of a thread cutting tooth is to be understood as the cutting edge formed at an intersection between the rake face and the flank of the thread cutting tooth facing forward. In other words, the primary cutting edge is, for each tooth, the edge that first enters the hole in the workpiece. A secondary cutting edge is formed at an intersection between the rake face and the flank of the thread cutting tooth facing rearward.

The thread cutting tap may be formed as a solid tool in one piece, e.g., as a unitary monolithic structure. The thread cutting tap may for example be made of cemented carbide or high-speed steel.

The thread cutting portion may comprise a tapering (chamfered) section extending from a front end of the thread cutting portion to a full profile section that extends from the tapering section towards a rear end of the thread cutting portion. Each cutting land may comprise one or more thread cutting teeth in the tapering section and a plurality of thread cutting teeth in the full profile section. The chip breaking features according to the present disclosure may be located in the tapering section of the thread cutting portion.

The thread cutting tap may include, in addition to the thread cutting portion, a shank portion located at (or near) the rear end of the thread cutting tap. Such shank portion may be mountable in a tool holder, for example arranged to a machine tool for machining a threaded hole using the thread cutting tap. The thread cutting tap may include additional portions, such as a neck portion located between the thread cutting portion and the shank portion. Such neck portion is not involved in the cutting process but may include flutes in order to facilitate chip evacuation. The thread cutting portion, the neck portion and the shank may be coaxial with each other. Accordingly, the shank portion may extend axially towards the rear end of the thread cutting tap either directly from the cutting portion or via a neck portion located between the thread cutting portion and the shank portion.

The front end of the thread cutting tap may correspond to the front end of the thread cutting portion. Alternatively, the thread cutting tap may comprise a further portion in front of the thread cutting portion, such as a "pre-chamfer" portion that is even more tapered than the tapering section of the thread cutting portion and that does not comprise any thread cutting teeth and is not meant to engage and cut the workpiece. Such pre-chamfer portion may facilitate insertion of the thread cutting tap into a hole of a workpiece for machining a thread therein. In embodiments wherein the thread cutting tap includes a pre-chamfer portion, the front end of the thread cutting portion is located axially rearward of the front end of the thread cutting tap.

According to some embodiments, the first chip breaking feature extends, in the direction of extension of the first flute, to a root between two consecutive thread cutting teeth. A root is the bottom surface joining two adjacent flanks of a thread, and may in this context be considered as a point or region where the secondary cutting edge of a cutting tooth transitions into a primary cutting edge of a subsequent cutting tooth following in a direction towards the rear end of the thread cutting tap.

Adjacent thread cutting teeth on each land may be axially spaced from each other by a thread pitch, defined as the distance from a point on a thread cutting tooth to a corresponding point on the next thread cutting tooth measured parallel to the longitudinal axis or the thread cutting tap. The thread cutting tap may have a certain lead, defined herein as the pitch multiplied by the number of thread starts during one revolution of the tap. The number of thread starts may for example be one (corresponding to a single lead tap) in which case the lead is the same as the pitch, or two (corresponding to a double lead tap) in which case the lead is twice the pitch.

The first chip breaking feature may extend, in the direction of extension of the first flute, rearward from a front end of the thread cutting portion.

The first chip breaking feature is preferably arranged in the tapering part of the thread cutting portion. In other words, according to some embodiments, the chip breaking feature may extend rearward from the front end of the thread cutting portion but not beyond a position where a full-profile section of the thread cutting portion begins.

The first distance that the first chip breaking feature extends in the direction of extension of the first flute on the rake face of the first flute may be within a range of 0.5P - 2P, wherein P is the thread pitch. As an example, the first distance may correspond to approximately 1P and the first chip breaking feature may thus extend from the front end of the thread cutting portion along the first thread cutting tooth in the first flute. Such relatively small extension of the first chip breaking feature in the first flute may provide a sufficient chip breaking effect while not deteriorating the surface finish of the machined thread more than necessary.

For embodiments wherein the thread cutting tap includes a pre-chamfer portion, the structure (e.g., a chamfer) forming the chip breaking feature may extend a certain distance also on the pre-chamfer portion of the thread cutting tap. However, a "chip breaking feature" should be understood as the part of such structure extending on the rake face, and not including any part of the pre-chamfer (which is not engaged in cutting). Accordingly, the distance by which a chip breaking feature extends on the rake face is measured from the front end of the thread cutting portion, irrespective of whether the thread cutting tap also includes a pre-chamfer portion in front of the thread cutting portion.

According to some embodiments, the first chip breaking feature extends, in a direction transverse to the direction of extension of the flute, from a cutting edge of at least one of the thread cutting teeth of the first land to a chip breaking feature border on the rake face of the first flute. The chip breaking feature border may extend along, or substantially along, an imaginary line on the rake face of the first flute that is tangent to a plurality of roots between consecutive thread cutting teeth of the first land.

As a consequence, the width of the first chip breaking feature, in a direction perpendicular to the extension of the first flute, will, due to the tapered configuration of the front part of the thread cutting portion, be rather narrow at the front of the thread cutting portion (where the thread cutting tooth height is small), and wider towards the rear.

With such configuration, the chip breaking feature border will, for a straight fluted thread cutting tap, extend straight, i.e., in a direction parallel to the longitudinal axis of the thread cutting tap. Alternatively, the chip breaking feature border may have an inclined extension, i.e., not parallel to a line tangent to the roots between consecutive thread cutting teeth. However, with an inclined extension of said border, the chip breaking feature may act in a way similar to a spiral point tap (sometimes referred to as a gun tap or gun nose tap) and thus push chips forward, which is not suitable for threading of blind holes, and would not provide optimal chip breaking. Thus, a straight extension of the chip breaking feature border may be beneficial in many applications. Moreover, it may be beneficial to have an area of the chip breaking feature that is relatively small. On the other hand, it has also been found that it may be advantageous if the chip breaking feature extends to the root following the front thread cutting tooth of the thread cutting portion. By using an extension of the chip breaking feature border along an imaginary line on the rake face of the flute that is tangent to a plurality of roots between consecutive thread cutting teeth, the chip breaking feature will extend to the root following the front thread cutting tooth but still have a relatively small width, in particular in the region adjacent the front end of the thread cutting portion, and, as already mentioned, not have the unwanted effect of pushing chips forward like a spiral point thread tap.

Thus, according to one aspect, this disclosure relates to a thread cutting tap wherein at least one flute thereof comprises a chip breaking feature arranged on the rake face, wherein the chip breaking feature extends, in a direction transverse to the direction of extension of the flute, from a cutting edge of at least one of the thread cutting teeth of a land associated with the flute to a chip breaking feature border on the rake face, wherein the chip breaking feature border extends along, or substantially along, an imaginary line on the rake face that is tangent to a plurality of roots between consecutive thread cutting teeth of the land.

"Substantially along" the imaginary line, as used herein when referring to the chip breaking feature border, should be understood as *coinciding as much as possible* in view of manufacturing tolerances and production methods used. For example, depending on the geometry of the thread cutting tap, it may be difficult to produce (e.g., grind) a chip breaking feature having a border that completely coincides with an imaginary line as defined above. According to some embodiments, the chip breaking feature border may, at any position along its extension, be within a distance, from an imaginary line as defined above, of 0.25 times the full thread depth of the thread cutting tap, such as, for example, within a distance of 0.1 times the full thread depth of the thread cutting tap. Correspondingly, according to some embodiments, the direction of extension of the chip breaking feature border may deviate less than 10° from the direction of extension of said imaginary line.

According to some embodiments, the first chip breaking feature includes a chamfer on the rake face that provides a negative rake angle. The chamfer may be arranged such as to provide a negative rake angle within a range of 10°- 60°.

Such negative rake angle will increase the cutting forces and the friction between the thread cutting tap and the workpiece material, and cause the chips to curl more tightly, such that the chips will break more easily.

The thread cutting tap may be uncoated or coated with a coating of a different material, e.g., coated with a wear resistant coating. According to some embodiments, the thread cutting tap is coated, and the first chip breaking feature includes a region on the rake face that is non-coated.

A non-coated region on the rake face of such coated thread cutting tap, and in particular a transition from such non-coated region to the coated region of the rake face, will increase the friction and cause the chips to break into smaller pieces.

Hence, a non-coated region may be used as a chip breaking feature instead of a chamfer. The chip breaking feature may also be based on a combination of a non-coated region and a chamfer. Thus, according to some embodiments, the region on the rake face that is non-coated corresponds to said chamfer. Such design is easily achieved by grinding the chamfer after the thread cutting tap has been coated, such that the coating is removed at the chamfer. Such design may be particularly suitable for threading of blind holes where a very effective chip breaking is required to prevent long chips from being stuck at the bottom of the hole.

Thus, according to one aspect, this disclosure relates to a coated thread cutting tap wherein at least one flute thereof comprises a chip breaking feature arranged on the rake face, wherein the chip breaking feature is formed by a chamfered, non-coated region.

For other applications, such as threading of a through-hole, it may be sufficient if the chip breaking feature is a coated chamfer, i.e., wherein the chamfer is grinded before the thread cutting tap is coated, since the chips are more easily evacuated through the bottom of the hole. If the chip breaking effect of a coated chamfer is considered to be sufficient, such design may be beneficial since a non-coated region may increase tool wear and thus decrease the tool life.

According to some embodiments, the second flute comprises a second chip breaking feature that extends, in the direction of extension of the flute, a second distance, different from the first distance, on the rake face of the flute, and wherein the third flute lacks a chip breaking feature.

The second distance may be greater than the first distance. The first and second distances are preferably selected such that the respective chip breaking features extend on the rake face all the way to a secondary cutting edge of a thread cutting tooth, or to a root following a thread cutting tooth. Hence, according to this disclosure, each chip breaking feature may extend rearwards in the direction of extension of the respective flute on the rake face all the way to a secondary cutting edge of a thread cutting tooth, and preferably all the way to, but not beyond, a root following such thread cutting tooth. Thereby, there will be no abrupt borderline, or step, between the chip breaking feature and adjacent parts of the rake face when moving along the rake face in the direction of extension of the flute.

According to some embodiments, the second distance is greater than the first distance by a length that is equal to, or substantially equal to, L/N, wherein L is the lead of the thread cutting tap and N is the number of flutes.

This will ensure that, if the first chip breaking feature extends to a certain position with respect to a thread cutting tooth on the first land (such as a root between two consecutive thread cutting teeth on the first land), the second chip breaking feature will extend to a corresponding position with respect to a thread cutting tooth on the second land.

According to some embodiments, the plurality of lands include a fourth land and the flutes include a fourth flute, wherein the fourth flute comprises a third chip breaking feature that extends, in the direction of extension of the flute, a third distance on the rake face of the flute, and wherein the third distance is different from both the first distance and the second distance. The third distance may be greater than both the first distance and the second distance.

The third distance may be greater than the second distance by a length corresponding to the difference between the second distance and the first distance, i.e., a length that is equal to, or substantially equal to, L/N, wherein L is the lead of the thread cutting tap and N is the number of flutes.

The second distance that the second chip breaking feature extends in the direction of extension of the second flute on the rake face of the second flute may be below 2. 5P, wherein P is the thread pitch.

The third distance that the third chip breaking feature extends in the direction of extension of the fourth flute on the rake face of the fourth flute may be below 3P, wherein P is the thread pitch.

Such relatively small extensions of the respective chip breaking features will provide a sufficient chip breaking effect while assuring that the surface finish is not adversely affected more than necessary.

Any of the features discussed above in relation to the first chip breaking feature are equally applicable also for the second chip breaking feature and/or for the third chip breaking feature. In other words, if disregarding the different extensions in their respective flutes, all the chip breaking features may be otherwise identical or have a similar design.

According to another aspect of the invention, a method for manufacturing a thread cutting tap according to any of the embodiments described herein is provided. The method comprises the steps of
- providing a thread cutting tap without chip breaking features;
- arranging a grinding wheel relative to the thread cutting tap such that the rotation axis of the grinding wheel is perpendicular to the extension of the first flute of the thread cutting tap;
- moving the grinding wheel, during rotation thereof, in a direction that is perpendicular to the rotation axis of the grinding wheel and parallel to the outer diameter of the thread cutting tap, to grind the first chip breaking feature.

By arranging the grinding wheel to grind the chip breaking feature in such direction which is parallel to the outer diameter of the thread cutting tap (which, for a straight fluted tap is also parallel to the longitudinal axis), it is possible to apply a chip breaking feature that has a border that extends along, or substantially along, an imaginary line on the rake face of the first flute that is tangent to a plurality of roots between consecutive thread cutting teeth of the first land, which, as discussed above, may be advantageous.

The method may be repeated for each flute of the thread cutting tap that shall comprise a chip breaking feature, e.g., all flutes but one.

### BRIEF DESCRIPTION OF DRAWINGS

The solution will now be described in more detail by means of exemplary embodiments and with reference to the accompanying drawings, in which:
Fig. 1 shows a thread cutting tap according to a first embodiment.
Fig. 2 shows the thread cutting tap according to the first embodiment in a cross-section II, as indicated in Fig. 3a, perpendicular to the central longitudinal axis of the thread cutting tap.
Figs. 3a, 3b and 3c are side views of the thread cutting tap according to the first embodiment as seen from directions toward a first flute, a second flute and a third flute, respectively, wherein each of the views includes a magnified illustration of a part of the rake face in the flute.
Fig. 4 shows a thread cutting tap according to a second embodiment.
Fig. 5 shows the thread cutting tap according to the second embodiment in a cross-section V, as indicated in Fig. 6a, perpendicular to the central longitudinal axis of the thread cutting tap.
Figs. 6a, 6b, 6c and 6d are side views of the thread cutting tap according to the second embodiment as seen from directions toward a first flute, a second flute, a fourth flute, and a third flute, respectively, wherein each of the views includes a magnified illustration of a part of the rake face in the flute.
Fig. 7 is a flowchart illustrating a method for manufacturing a thread cutting tap.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

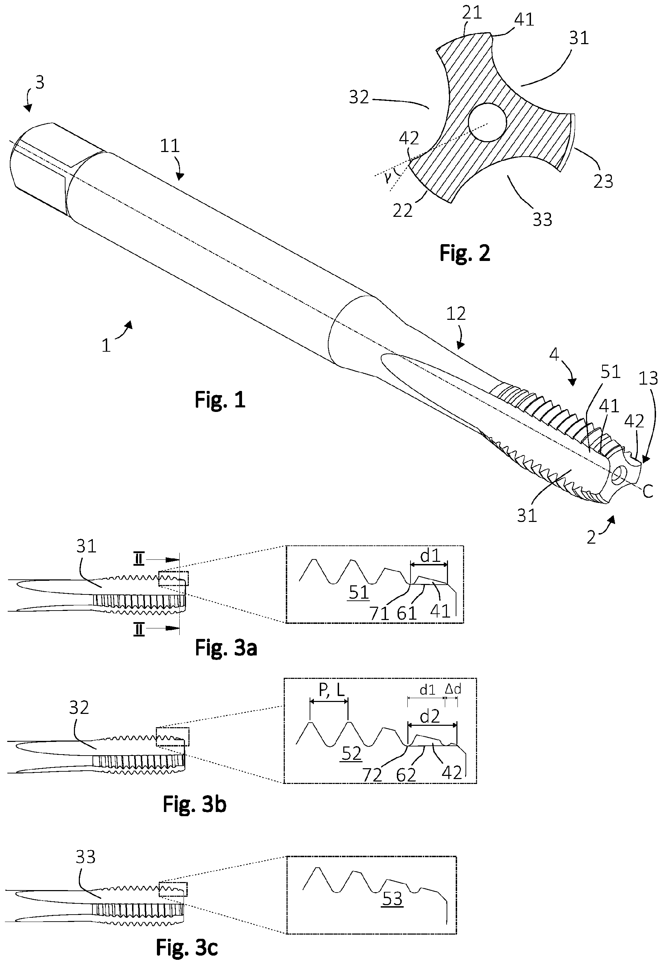

A thread cutting tap 1 according to a first embodiment is illustrated in Figs. 1-3. The thread cutting tap 1 comprises a front end 2 and a rear end 3. The thread cutting tap 1 has an axial extension along a longitudinal axis C extending from the front end 2 to the rear end 3. The thread cutting tap comprises a thread cutting portion 4 extending along the longitudinal axis C over a part of the axial extension of the thread cutting tap. The thread cutting tap 1 also includes a shank portion 11, a neck portion 12 located between the shank portion 11 and the cutting portion 4, and a small pre-chamfer portion 13 in front of the cutting portion 4.

The thread cutting portion 4 comprises a plurality of lands including a first land 21, a second land 22, and a third land 23, separated from each other by a corresponding number of associated flutes, including a first flute 31, a second flute 32, and a third flute 33. Each of the lands includes a plurality of thread cutting teeth and each of the flutes includes a rake face 51, 52, 53. The first flute 31 comprises a first chip breaking feature 41 in the form of a chamfer that extends, in the direction of extension of the first flute (which, since the flutes are straight, corresponds to a direction parallel to the longitudinal axis) a first distance d1 (illustrated in Fig. 3a) on the rake face 51 of the first flute 31.

The second flute 32 comprises a second chip breaking feature 42 in the form of a chamfer that extends, in the direction of extension of the second flute (which, since the flutes are straight, corresponds to a direction parallel to the longitudinal axis) a second distance d2 (illustrated in Fig. 3b) on the rake face 52 of the second flute 32.

The third flute 33, on the other hand, lacks a chip breaking feature on the rake face 53, as seen in Fig. 3c.

As seen in Figs. 3a and 3b, the chip breaking features 41, 42 extend rearward, in the direction of extension of the flutes, from a front end of the cutting portion 4. Due to the presence of a pre-chamfer portion 13, the front end of the cutting portion is not the front end 2 of the thread cutting tap.

The first distance d1 in the illustrated embodiment approximately corresponds to the pitch P (indicated in Fig. 3b). The thread cutting tap has a lead L (also indicated in Fig. 3b) which in this case corresponds to the pitch P since the thread cutting tap 1 is a single lead tap.

The second distance d2 is greater than the first distance d1 by a length Δd corresponding to the lead L divided by the number of flutes (three in this case). Thereby, the second chip breaking feature 42 in the second flute 32 will extend to a corresponding position with respect to a thread cutting tooth of the associated second land 22 as the first chip breaking feature 41 in the first flute 31 with respect to a thread cutting tooth of the associated first land 21. In the illustrated embodiment, such corresponding positions are the respective roots 71, 72 between two consecutive thread cutting teeth.

In a direction transverse to the direction of extension of the flute, the first chip breaking feature 41 extends on the rake face 51 from a cutting edge of a front cutting tooth on the first land 21 to a chip breaking feature border 61 on the rake face 51.

The chip breaking feature border 61 extends along an imaginary line on the rake face 51 of the first flute 31 that is tangent to a plurality of roots 71 between consecutive thread cutting teeth of the first land 21. In the illustrated embodiment, the chip breaking feature border 61 completely coincides with such imaginary line.

Correspondingly, the second chip breaking feature 42 extends on the rake face 52 in the second flute 32 from a cutting edge of the front cutting teeth on the second land 22 to a chip breaking feature border 62 on the rake face 52.

The chip breaking feature border 62 extends along an imaginary line on the rake face 52 of the second flute 32 that is tangent to a plurality of roots 72 between consecutive thread cutting teeth of the second land 22. In the illustrated embodiment, the chip breaking feature border 62 completely coincides with such imaginary line.

The chip breaking features 41, 42 in the illustrated embodiment are chamfers grinded on the rake face, which results in a negative rake angle γ. The negative rake angle γ is in the illustrated embodiment about 30°. The rake angle is indicated in Fig. 2 only for the second chip breaking feature 42, but the same rake angle is present also for the first chip breaking feature 41. As seen in Fig. 2 and Fig. 3c, the third flute 33 does not comprise any chip breaking feature and the cutting edge of all teeth in the third flute 33 therefore has a positive rake angle.

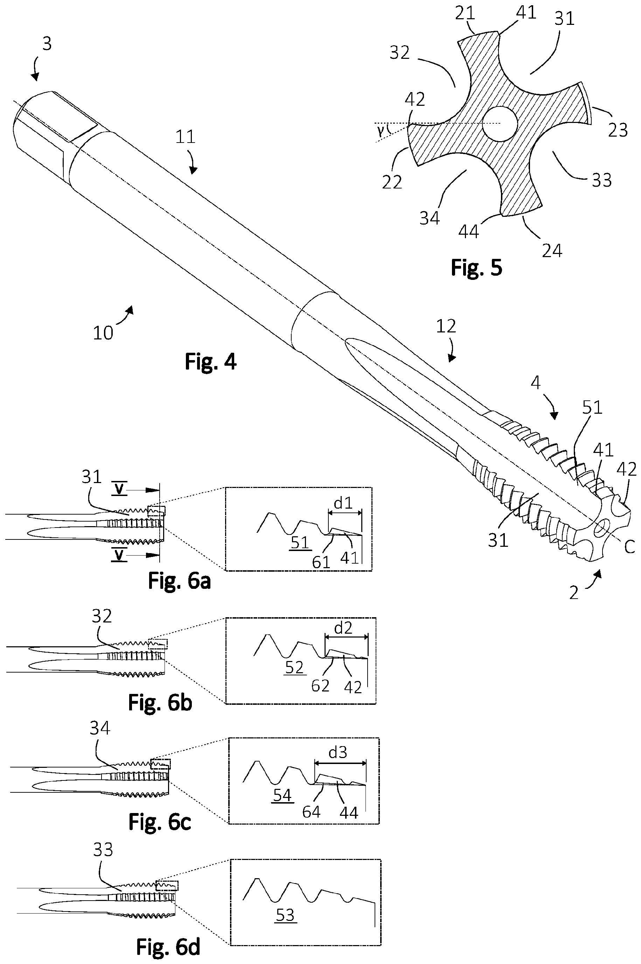

A thread cutting tap 10 according to a second embodiment is illustrated in Figs. 4-6.

The thread cutting tap 10 according to the second embodiment differs from the thread cutting tap 1 according to the first embodiment in that it has fourth flute 34 comprising a third chip breaking feature 44 in the form of a chamfer that extends, in the direction of extension of the fourth flute (which, since the flutes are straight, corresponds to a direction parallel to the longitudinal axis C) a third distance d3 (illustrated in Fig. 6c) on the rake face 54 of the fourth flute 34.

As seen in Figs. 6a-6c, all the chip breaking features 41, 42, 44 extend rearward, in the direction of extension of the flutes, from a front end of the thread cutting portion 4, which in this case corresponds to the front end 2 of the thread cutting tap 10 since the thread cutting tap 10 does not include any pre-chamfer portion in front of the thread cutting portion.

Also the thread cutting tap according to the second embodiment is a single lead thread cutting tap, wherein the lead is the same as the pitch of the thread cutting tap, and wherein the first distance d1 approximately corresponds to the pitch.

The second distance d2 is greater than the first distance d1 by a length corresponding to the lead divided by the number of flutes (four in this case) and the third distance d3 is also greater than the second distance d2 by such length. Thereby, all the chip breaking features 41, 42, 44 will extend to corresponding positions with respect to a thread cutting tooth on the respective associated lands. In the illustrated embodiment, such corresponding positions are close to respective roots between consecutive thread cutting teeth, but as seen in Figs. 6a-6c, the respective chip breaking feature borders 61, 62, 64 do not completely coincide with imaginary lines (illustrated by dashed lines in Figs. 6a-6c) tangent to roots of the thread cutting teeth, but deviates slightly therefrom.

Other features of the thread cutting tap 10 according to the second embodiment are similar as for the thread cutting tap 1 according to the first embodiment.

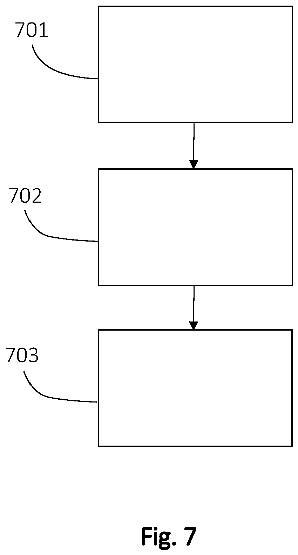

Fig. 7 is a flowchart illustrating a method for producing a thread cutting tap according to embodiments described herein.

In a first step 701, a thread cutting tap without chip breaking features is provided.

In a second step 702, a grinding wheel is arranged relative to the thread cutting tap such that the rotation axis of the grinding wheel is perpendicular to the extension of the first flute of the thread cutting tap.

In a third step 703, the grinding wheel is moved, during rotation thereof, in a direction that is perpendicular to the rotation axis of the grinding wheel and parallel to the outer diameter of the thread cutting tap, to grind the first chip breaking feature.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A thread cutting tap (1, 10) having an axial extension along a longitudinal axis (C) thereof from a front end (2) of the thread cutting tap to a rear end (3) of the thread cutting tap, wherein the thread cutting tap comprises a thread cutting portion (4) extending along the longitudinal axis (C) over at least a part of the axial extension of the thread cutting tap, and wherein the thread cutting portion (4) comprises a plurality of lands including a first land (21), a second land (22), and a third land (23), separated from each other by a corresponding number of associated flutes, including a first flute (31), a second flute (32), and a third flute (33), wherein each of the lands includes a plurality of thread cutting teeth and each of the flutes includes a rake face (51, 52, 53), wherein the first flute (31) comprises a first chip breaking feature (41) that extends, in the direction of extension of the first flute, a first distance (d1) on the rake face (51) of the first flute, **characterized in that** at least one of the second flute (32) and the third flute (33) lacks a chip breaking feature.

2. A thread cutting tap according to claim 1, wherein the first chip breaking feature extends, in the direction of extension of the first flute, to a root between two consecutive thread cutting teeth.

3. A thread cutting tap according to any of the previous claims, wherein adjacent thread cutting teeth on each land are axially spaced from each other by a thread pitch P and wherein the first distance (d1) is within a range of 0.5P - 2P.

4. A thread cutting tap according to any one of the previous claims, wherein the first chip breaking feature extends, in the direction of extension of the flute, rearward from a front end of the thread cutting portion.

5. A thread cutting tap according to any one of the previous claims, wherein the first chip breaking feature extends, in a direction transverse to the direction of extension of the flute, from a cutting edge of at least one of the thread cutting teeth of the first land to a chip breaking feature border (61) on the rake face of the first flute.

6. A thread cutting tap according to claim 5, wherein the chip breaking feature border extends along, or substantially along, an imaginary line on the rake face of the first flute that is tangent to a plurality of roots between consecutive thread cutting teeth of the first land.

7. A thread cutting tap according to any one of the previous claims, wherein the first chip breaking feature includes a chamfer on the rake face that provides a negative rake angle (γ).

8. A thread cutting tap according to claim 7, wherein the chamfer is arranged such as to provide a negative rake angle (γ) within a range of 10°-60°.

9. A thread cutting tap according to any one of the previous claims, wherein the thread cutting tap is coated, and the first chip breaking feature includes a region on the rake face that is non-coated.

10. A thread cutting tap according to claim 9 and any one of the claims 7-8, wherein the region on the rake face that is non-coated corresponds to the chamfer.

11. A thread cutting tap according to any one of the previous claims, wherein the second flute (32) comprises a second chip breaking feature (42) that extends, in the direction of extension of the second flute, a second distance (d2), different from the first distance (d1), on the rake face (52) of the second flute, and wherein the third flute (33) lacks a chip breaking feature.

12. A thread cutting tap according to claim 11, wherein the second distance (d2) is greater than the first distance (d1) by a length (Δd) that is equal to, or substantially equal to, a lead of the thread cutting tap divided by the number of flutes.

13. A thread cutting tap according to any one of the claims 11-12, wherein the plurality of lands include a fourth land (24) and the flutes include a fourth flute (34), wherein the fourth flute (34) comprises a third chip breaking feature (44) that extends, in the direction of extension of the fourth flute, a third distance (d3) on the rake face (54) of the fourth flute, and wherein the third distance (d3) is different from both the first distance (d1) and the second distance (d2).

14. Method for manufacturing a thread cutting tap according to any one of the previous claims, comprising the steps of:
- providing (701) a thread cutting tap without chip breaking features;
- arranging (702) a grinding wheel relative to the thread cutting tap such that a rotation axis of the grinding wheel is perpendicular to the extension of the first flute of the thread cutting tap;
- moving the grinding wheel, during rotation thereof, in a direction that is perpendicular to the rotation axis of the grinding wheel and parallel to an outer diameter of the thread cutting tap, to grind the first chip breaking feature.
